# EUROPÄISCHE PATENTSCHRIFT

(11) **EP 2 185 917 B1**
(45) Veröffentlichungstag und Bekanntmachung des Hinweises auf die Patenterteilung: **14.12.2011**
(21) Anmeldenummer: 08760752.9
(22) Anmeldetag: 10.06.2008
(51) Int. Cl.: B60S 1/08, G01N 21/55, G01N 21/45

(54) **OPTISCHE REGENSENSORVORRICHTUNG FÜR EIN KRAFTFAHRZEUG**
OPTICAL RAIN SENSOR APPARATUS FOR A MOTOR VEHICLE
DISPOSITIF OPTIQUE DE DETECTION DE PLUIE POUR VEHICULE AUTOMOBILE

(30) Priorität: 09.08.2007 DE 102007037548
(43) Veröffentlichungstag der Anmeldung: 19.05.2010
(73) Patentinhaber: Robert Bosch GmbH, 70442 Stuttgart (DE)
(72) Erfinder: PACK, Andreas, F-67500 Hagenau (FR); SCHWARZ, Axel, 76530 Baden-Baden (DE); HODAPP, Bruno, 77855 Achern-Oensbach (DE); FEILER, Wolfgang, 72766 Reutlingen (DE); WOLFF, Markus, 72555 Metzingen (DE); HOG, Norbert, 77704 Oberkirch (DE)
(86) Internationale Anmeldenummer: PCT/EP2008/057191
(87) Internationale Veröffentlichungsnummer: WO 2009/019059

(56) Entgegenhaltungen:
- EP-A- 1 647 458
- DE-C1- 19 713 910
- DE-C1- 19 946 220
- US-A1- 2002 139 944
- US-A1- 2006 215 164

## Beschreibung

Die Erfindung betrifft eine verschachtelte Anordnung von wenigstens zwei gegeneinander gerichteten optischen Regensensorvorrichtungen.

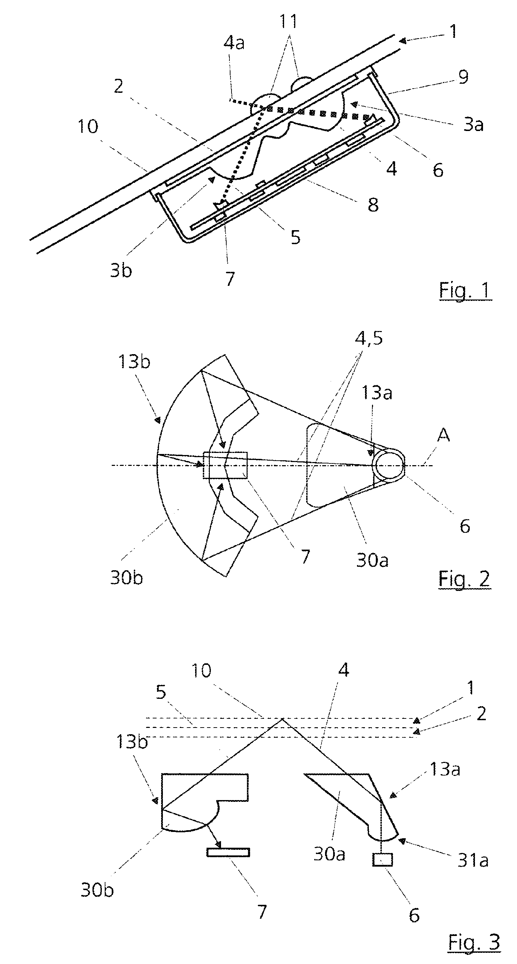

Aus dem Stand der Technik sind Regensensoren bekannt, die im allgemeinen nach dem in Figur 1 dargestellten Prinzip arbeiten.

Eine elektromagnetische Strahlungsquelle 6 wie beispielsweise eine Infrarot-LED oder dergleichen sendet elektromagnetische Strahlung 4 (das sogenannte Nutzlicht) unter einem bestimmten Winkel von der Innenseite einer Scheibe bzw. Windschutzscheibe 1 her, also üblicherweise vom Fahrgastraum des Kraftfahrzeugs (nicht dargestellt) aus, in Richtung der Windschutzscheibe 1. Die Strahlung 4 passiert die Grenzfläche zwischen Innenraum und Windschutzscheibe 1 und wird gegen die von Windschutzscheibe 1 und dem Fahrzeugäußeren gebildete Grenzfläche 10 gelenkt, die in diesem Bereich als sensitive Fläche bezeichnet wird. In der Regel sind dann die Lichtstrahlen in der Windschutzscheibe 1 parallel. Der Einfallswinkel der elektromagnetischen Strahlung 4 gegenüber der Grenzfläche 10 ist dabei so gewählt, dass die elektromagnetische Strahlung 4 bei einer nicht beispielsweise durch Regentropfen 11 benetzten Windschutzscheibe 1 an der Grenzfläche 10 nach den Gesetzen der Optik in Richtung der Innenseite der Windschutzscheibe 1 als reflektierte Strahlung 5 totalreflektiert wird und von einem in der Nähe der Scheibeninnenseite angeordneten beispielsweise als Infrarot-LRD ausgebildeten Empfänger 7 detektiert wird. Bei einer Benetzung der Scheibe 1 mit den Regentropfen 11 wird diese Totalreflexion wie aus Figur 1 ersichtlich aufgrund der geänderten Brechzahlverhältnisse an der Grenzfläche 10 gestört bzw. aufgehoben, so dass ein Teil 4a der elektromagnetischen Strahlung 4 nach außen ausgekoppelt wird und an dem Empfänger 7 weniger Strahlung 5 als im Falle der Totalreflexion ankommt. Aus dem Einbruch des Lichteinfalls (bzw. den Signaldifferenzen) schließt eine der Strahlungsquelle 6 und dem Empfänger 7 zugeordnete, z. B. auf einer Leiterplatte angeordnete Auswerteeinheit 8 auf den vorliegenden Benetzungsgrad und steuert entsprechend Wischvorgänge des Scheibenwischers. Um dieses Grundprinzip zu realisieren, sind Strahlungsquelle 6, Empfänger 7 und die Auswerteeinheit 8 zusammen mit einem nicht dargestellten Steuergerät in einem Gehäuse 9 untergebracht, das zum Zwecke der effektiven Lichtstrahlführung mit einer der Strahlungsquelle 6 zugeordneten Senderoptikanordnung bzw. Einkoppeloptik 3a und einer dem Empfänger 7 zugeordneten Empfängeroptikanordnung bzw. Auskoppeloptik 3b ausgerüstet ist und zum Zwecke der ungestörten Lichtleitung und Einkopplung der Strahlung 4 bzw. 5 in die bzw. aus der Windschutzscheibe 1 mit einem optischen Koppelmedium als Zwischenschicht 2, z. B. aus Silikon, luftblasenfrei an die Windschutzscheibe 1 angekoppelt ist. Die genannten Einkoppel- bzw. Auskoppeloptiken 3a, 3b bestehen dabei üblicherweise aus Linsen, deren eine Seite konvex und deren andere Seite plan ist.

Regensensoren der zuvor geschilderten Ausführungsform sind beispielsweise aus der DE 102 61 244 A1 bekannt.

Dabei verbessern die folgenden insbesondere optischen Eigenschaften die Funktionalität derartiger Sensoren. Die sensitive Fläche sollte möglichst groß und homogen sein. Der Detektor bzw. der Empfänger 7 sollte möglichst von Fremdlicht (z. B. Sonnenlicht) abgeschirmt sein. Das Nutzlicht 4 sollte nur über die Windschutzscheibe 1 auf den Empfänger 7 gelangen. Andere Lichtpfade (z. B. Streulicht, insbesondere direkt vom Sender bzw. der Strahlungsquelle 6 zum Empfänger 7) sind unerwünscht. Kein Nutzlicht 4 sollte aus dem Regensensor austreten, da dieses über externe Objekte auf den Empfänger 7 zurück reflektiert werden könnte. Der Wirkungsgrad, d. h. das Verhältnis zwischen gesendetem und empfangenen Licht sollte möglichst groß sein. Die gesamte Optik sollte robust gegenüber Bauteilvarianzen (z. B. Positionsungenauigkeiten) sein. Auskondensiertes Wasser bzw. aus dem Koppelmedium 2 austretendes Silikonöl im Regensensor darf dessen Funktionalität nur unwesentlich beeinflussen. Die Optik sollte kostengünstig herstellbar sein (z. B. sollten Hinterschnitte vermieden werden, damit der Einsatz eines Spritzgussverfahrens möglich ist). Des Weiteren ist ein modularer Aufbau der Optik erwünscht, weil dadurch zum Einen eine bessere Abschottung von Fremd- und Streulicht und zum Anderen eine größere Vielfalt bei den zu verwendenden Materialien ermöglicht wird (Einsatz besonders kostengünstiger Materialien für entsprechende Teilmodule).

Die vorstehend genannten Eigenschaften müssen insbesondere unter Berücksichtigung eines minimalen Bauraums bzw. Volumens des Regensensors als Randbedingung optimiert werden. Auch Designaspekte (z. B. kreisförmige Bauform) sollten Beachtung finden.

In der DE 10 2004 015 699 A1 wird ein Regensensor, insbesondere für ein Kraftfahrzeug, vorgeschlagen, der mindestens einen Sender und einen Empfänger umfasst, der die Strahlung des Senders zu empfangen vermag und ein Signal in Abhängigkeit der empfangenen Strahlung abgibt. Weiterhin umfasst der Regensensor einen Lichtleitkörper, der mit einer Grundfläche durch ein Koppelmedium mit einer Scheibe verbindbar ist. Der Lichtleitkörper leitet hierbei die Strahlung des Senders in Richtung der Scheibe. Das Koppelmedium weist eine lichtführende Struktur auf. Der beschriebene Regensensor weist einen relativ großen Durchmesser auf.

In der EP 1 647 458 A1 ist eine Sensoreinrichtung und Scheibenwischersteuerschaltung angegeben.

Die DE 197 13 910 C1 betrifft eine optoelektronische Sensoreinrichtung zur Erfassung des auf der äußeren Oberfläche einer transparenten Kraftfahrzeug-Scheibe vorhandenen Niederschlags, wobei an die innere Oberfläche der Scheibe ein etwa quaderförmiger Strahlenleitkörper mit seiner vorderen Oberfläche angekoppelt ist, dem ein Strahlensender und ein Strahlenempfänger zugeordnet sind, die auf einem plattenförmigen Substrat angeordnet sind, welches sich im Bereich der von der Scheibe abgewandten hinteren Oberfläche des Strahlenleitkörpers parallel zur inneren Oberfläche der Scheibe erstreckt.

### Vorteile der Erfindung

Die erfindungsgemäße verschachtelte, wenigstens annähernd auf einer kreisförmigen Grundfläche angeordnete Anordnung von wenigstens zwei als separate optische Kanäle (20,21) gegeneinander gerichteten optischen Regensensorvorrichtungen für ein Kraftfahrzeug mit wenigstens einer elektromagnetischen Strahlungsquelle und wenigstens einer Empfangseinrichtung, mittels welcher eine von der wenigstens einen Strahlungsquelle emittierte elektromagnetische Strahlung empfangbar ist, wobei die elektromagnetische Strahlung von der wenigstens einen Strahlungsquelle mittels wenigstens einer Senderoptikanordnung an eine Grenzfläche der Windschutzscheibe des Kraftfahrzeugs mit dem Fahrzeugäußeren geleitet, dort reflektiert und mittels wenigstens einer Empfängeroptikanordnung weiter auf die wenigstens eine Empfangseinrichtung geleitet wird, wobei die wenigstens eine Senderoptikanordnung und die wenigstens eine Empfängeroptikanordnung jeweils wenigstens eine gekrümmte Totalreflexionsfläche für die elektromagnetische Strahlung aufweisen, wobei die Krümmungen der jeweiligen Totalreflexionsflächen der wenigstens einen Senderoptikanordnung und der wenigstens einen Empfängeroptikanordnung in der Weise aufeinander abgestimmt sind, dass die elektromagnetische Strahlung von der gekrümmten Totalreflexionsfläche der Senderoptikanordnung aufgeweitet und von der gekrümmten Totalreflexionsfläche der Empfängeroptikanordnung auf die Empfangseinrichtung gebündelt wird, hat den Vorteil, dass zwei gegeneinander gerichtete Optiken, d. h. optische Kanäle, um ein besseres Fremdlichtverhalten zu erreichen auf einer kleinen und zudem aus Designgründen runden bzw. kreisförmigen Grundfläche untergebracht werden können. Durch externes Fremdlicht kann dann immer nur einer der Kanäle geblendet werden. Die optischen Regensensorvorrichtungen weisen relativ zu ihrer Baugröße verbesserte optische Eigenschaften auf und sind kostengünstig herstellbar. Durch die relativ kleine Ausgestaltung der Senderoptikanordnung bzw. der Sendelinse und der dazu relativ großen Empfängeroptikanordnung bzw. Empfängerlinse ist eine vorteilhafte Verschachtelung der Optiken möglich.

In vorteilhafter Weise sind also sowohl die Einkoppeloptik bzw. die Senderoptikanordnung als auch die Auskoppeloptik bzw. die Empfängeroptikanordnung mit einer Reflexionsfläche versehen, wodurch eine Größenreduzierung (Stauchung) erreicht wird. Vorteilhaft ist es, wenn die Totalreflexionsfläche des Senders bzw. der Senderoptikanordnung konkav gekrümmt und die Totalreflexionsfläche des Empfängers bzw. der Empfängeroptikanordnung konvex gekrümmt ist. Dadurch wird das Licht an der Totalreflexionsfläche des Senders zuerst aufgeweitet (d. h. aufgefächert) und anschließend an der Totalreflexionsfläche des Empfängers wieder zusammengeführt bzw. fokussiert oder gebündelt. Hierzu sollten die Krümmungen der jeweiligen Totalreflexionsflächen der wenigstens einen Senderoptikanordnung und der wenigstens einen Empfängeroptikanordnung entsprechend aufeinander abgestimmt sein. Dabei kann es sich bei den Krümmungen um zu einer Senkrechten zur Einfallsebene des Nutzlichts bzw. der elektromagnetischen Strahlung gekrümmte Ebenen handeln.

Durch das Auffächern der Lichtstrahlen wird eine Vergrößerung der sensitiven Fläche erreicht. Da die Strahlen durch die Totalreflexionsflächen zum Mittelpunkt hin reflektiert werden, ist die Grundfläche und damit der benötigte Bauraum der Regensensoroptik sehr klein. Innerhalb des optischen Wegs erfolgt keine Parallelisierung des Nutzlichts. Daher ist auch die Empfängeroptikanordnung nicht für paralleles Licht ausgelegt und der Regensensor kann durch paralleles Fremdlicht (z. B. durch im Wesentlichen paralleles Sonnenlicht) weniger stark geblendet werden.

In einer konstruktiven Ausgestaltung der Erfindung kann ferner wenigstens eine, insbesondere zackenartige, lichtundurchlässige Fremdlichtbarriere vorgesehen sein.

Dadurch kann der Regensensor vor unerwünschtem Fremdlicht geschützt werden.

Vorteilhaft ist, wenn die wenigstens eine Empfangseinrichtung und die wenigstens eine Strahlungsquelle durch wenigstens eine lichtundurchlässige Wand voneinander getrennt sind.

Internes Streulicht, welches nicht über die Windschutzscheibenoberfläche vom Sender zum Empfänger gelangt, wird bei einer Benetzung der Windschutzscheibe mit Wasser nicht ausgekoppelt. Dieses Licht sollte eliminiert werden, um immer maximale Signaldifferenzen zu erhalten. Es kann durch lichtundurchlässige Wände, die Sender und Empfänger so weit wie möglich trennen, abgeschottet werden.

Durch zusätzliche Totalreflexionsflächen, insbesondere in Randbereichen der wenigstens einen Senderoptikanordnung und/oder der wenigstens einen Empfängeroptikanordnung, kann in vorteilhafter Weise die Lichteffizienz, d. h. das Verhältnis aus von dem Detektor empfangenem zu ausgesendetem Licht, erhöht werden.

Nachfolgend sind anhand der Zeichnung prinzipmäßig Ausführungsbeispiele der Erfindung dargestellt.

### Kurzbeschreibung der Zeichnung

Es zeigen:
- Figur 1: eine Darstellung des Wirkprinzips einer optischen Regensensorvorrichtung nach dem Stand der Technik;
- Figur 2: eine prinzipmäßige Schnittansicht einer erfindungsgemäßen optischen Regensensorvorrichtung von oben;
- Figur 3: eine prinzipmäßige Schnittansicht der erfindungsgemäßen optischen Regensensorvorrichtung aus Fig. 2 an einer Achse A;
- Figur 4: eine prinzipmäßige Schnittansicht einer verschachtelten Anordnung von zwei erfindungsgemäßen optischen Regensensorvorrichtungen von oben;
- Figur 5: eine prinzipmäßige Schnittansicht der erfindungsgemäßen optischen Regensensorvorrichtung aus Fig. 2 in einer Ausführungsform mit Maßnahmen zur Verbesserung der Funktionalität der optischen Regensensorvorrichtung;
- Figur 6: eine prinzipmäßige Schnittansicht der erfindungsgemäßen optischen Regensensorvorrichtung in einer weiteren Ausführungsform mit Maßnahmen zur Verbesserung der Funktionalität der optischen Regensensorvorrichtung von oben; und
- Figur 7: eine prinzipmäßige Darstellung eines Teils einer Senderoptikanordnung der optischen Regensensorvorrichtung mit Maßnahmen zur Verbesserung der Funktionalität der optischen Regensensorvorrichtung.

### Beschreibung von Ausführungsbeispielen

Gleiche Bezugszeichen beschreiben auch in unterschiedlichen Figuren funktional gleiche Elemente.

Figur 2 zeigt eine erfindungsgemäße optische Regensensorvorrichtung. Eine Einkoppeloptik bzw. Senderoptikanordnung 30a und eine Auskoppeloptik bzw. Empfängeroptikanordnung 30b weisen jeweils eine gekrümmte Totalreflexionsfläche 13a, 13b für die elektromagnetische Strahlung 4, 5 auf, wobei die Krümmungen der jeweiligen Totalreflexionsflächen 13a, 13b der Senderoptikanordnung 30a und der Empfängeroptikanordnung 30b in der Weise aufeinander abgestimmt sind, dass die elektromagnetische Strahlung 4, 5 von der gekrümmten Totalreflexionsfläche 13a der Senderoptikanordnung 30a aufgeweitet und von der gekrümmten Totalreflexionsfläche 13b der Empfängeroptikanordnung 30b auf die Empfangseinrichtung 7 gebündelt wird. Die Windschutzscheibe 1 ist in Figur 2 gestrichelt angedeutet.

Wie weiter aus Figur 2 ersichtlich, ist die Totalreflexionsfläche 13a des Senders bzw. der Strahlungsquelle 6 bzw. der Senderoptikanordnung 30a konkav gekrümmt und die Totalreflexionsfläche des Empfängers 7 bzw. der Empfängeroptikanordnung 30b konvex gekrümmt. Dadurch wird das Licht 4 an der Totalreflexionsfläche 13a der Strahlungsquelle 6 zuerst aufgeweitet (d. h. aufgefächert) und anschließend wieder an der Totalreflexionsfläche 13b des Empfängers 7 zusammengeführt bzw. fokussiert oder gebündelt. Hierzu sind die Krümmungen der jeweiligen Totalreflexionsflächen 13a, 13b der Senderoptikanordnung 30a und der Empfängeroptikanordnung 30b entsprechend aufeinander abgestimmt. Dabei handelt es sich bei den Krümmungen um zu einer Senkrechten zur Einfallsebene des Nutzlichts bzw. der elektromagnetischen Strahlung 4, 5 gekrümmte Ebenen.

Die Senderoptikanordnung 30a und die Empfängeroptikanordnung 30b stellen eine Art von Hohlspiegelanordnungen dar.

In Figur 3 ist die optische Regensensorvorrichtung vereinfacht in einem Querschnitt orthogonal zu Figur 2 zu sehen. Dabei ist ersichtlich, dass die Senderoptikanordnung 30a einen Bereich 31 a zum Parallelisieren der elektromagnetischen Strahlung 4 aufweist.

Die Senderoptikanordnung 30a und die Empfängeroptikanordnung 30b können in weiteren nicht dargestellten Ausführungsbeispielen auch einstückig ausgeführt sein, wodurch Einbautoleranzen vermieden werden.

Durch die zentrische Positionierung der Strahlungsquelle bzw. der LED 6 (Emitterdiode) unter der Sendelinse bzw. Senderoptikanordnung 30a, wird eine große Homogenität der sensitiven Fläche an der Windschutzscheibe 1 und ein hoher Wirkungsgrad erreicht. Die Totalreflexionsflächen 13a, 13b sind derart angeordnet, dass abtropfendes Kondenswasser vom Gehäuse (in den Figuren 2 bis 5 nicht explizit dargestellt) nicht auf die Totalreflexionsflächen 13a, 13b gelangen kann und eine dadurch bedingte Fehlsteuerung der Scheibenwischer durch die optische Regensensorvorrichtung somit vermieden wird.

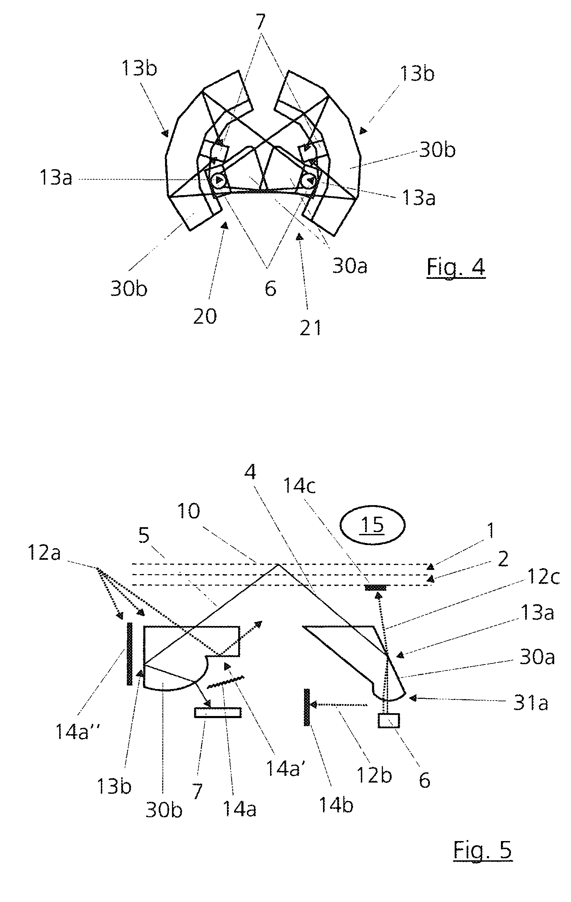

Durch die relativ kleine Ausgestaltung der Senderoptikanordnung 30a und der dazu relativ großen Empfängeroptikanordnung 30b ist des Weiteren eine gute Verschachtelung der Optiken 30a, 30b möglich. Ein derartige verschachtelte Anordnung von wenigstens zwei als separate optische Kanäle 20, 21 gegeneinander gerichteten optischen Regensensorvorrichtungen ist in Figur 4 dargestellt. Die verschachtelte Anordnung ist auf einer kreisförmigen Grundfläche angeordnet. Ungewünschtes Streulicht zwischen den beiden optischen Kanälen 20, 21 sollte insbesondere durch entsprechende Barrieren oder Abschirmungen absorbiert werden (nicht dargestellt). Um die Effizienz der Anordnung weiter zu verbessern, könnte eine nicht dargestellte zusätzliche Totalreflexionsfläche eingeführt werden, die das Licht bewusst im richtigen Winkel über die Windschutzscheibe 1 in den jeweils zweiten bzw. anderen optischen Kanal 20, 21 lenkt. Dadurch kann nicht nur die Lichteffizienz erhöht, sondern auch die sensitive Fläche vergrößert werden. Die optischen Kanäle 20, 21 sind dann jedoch nicht mehr unabhängig voneinander.

Durch die Eliminierung von unerwünschten Lichteinflüssen wird die Funktionalität des Sensors deutlich verbessert. In Figur 5 sind derartige unerwünschte Lichteinflüsse und entsprechende Abhilfemaßnahmen dargestellt.

Seitlich einfallendes Fremdlicht 12a stört den Empfänger 7 und kann bei bestimmten Einfallswinkeln - falls vorhanden - sogar beide optische Kanäle 20, 21 blenden. Damit das Fremdlicht 12a vollständig aus der Empfängeroptikanordnung 30b austritt, bevor es auf eine Fremdlichtbarriere 14a trifft, sollte die Oberfläche der Empfängeroptikanordnung 30b im Bereich 14a' speziell (total-)reflexiv ausgebildet sein. Ansonsten würde bei bestimmten Einfallswinkeln das Licht teilweise an der Linsenoberfläche bzw. der Empfängeroptikanordnung 30b reflektiert und durch Mehrfachreflexion in der Empfängeroptikanordnung 30b den Empfänger 7 trotz Fremdlichtbarriere 14a erreichen. Die Fremdlichtbarriere 14a weist eine zackenartige Struktur auf. Zusätzlich ist eine weitere Fremdlichtbarriere 14a" vorgesehen, welche die Empfängeroptikanordnung 30b seitlich abschirmt.

Internes Streulicht 12b, das nicht über die Oberfläche der Windschutzscheibe 1 von der Strahlungsquelle 6 zum Empfänger 7 gelangt, wird bei Benetzung der Windschutzscheibe 1 mit Wasser 11 nicht ausgekoppelt. Dieses Licht 12b sollte eliminiert werden, um immer maximale Signaldifferenzen zu erhalten. Es kann durch lichtundurchlässige Wände, die die Strahlungsquelle 6 und den Empfänger 7 so weit wie möglich trennen, abgeschottet werden. In Figur 5 ist eine derartige lichtundurchlässige Wand 14b dargestellt.

Das auch bei trockener Windschutzscheibe 1 ungewollt nach außen austretende Nutzlicht (gestrichelt angedeutet) kann an externen Gegenständen 15 als externes Streulicht 12c reflektiert werden und zurück in den Empfänger 7 reflektiert werden. Um dies zu verhindern, sollte die Totalreflexionsfläche 13a der Senderoptikanordnung 30a möglichst das gesamte eingekoppelte Nutzlicht 4 umlenken. Alternativ oder zusätzlich kann, wie in Figur 5 angedeutet, eine weitere Fremdlichtsperre 14c über der Senderoptikanordnung 30a das nicht umgelenkte Licht absorbieren.

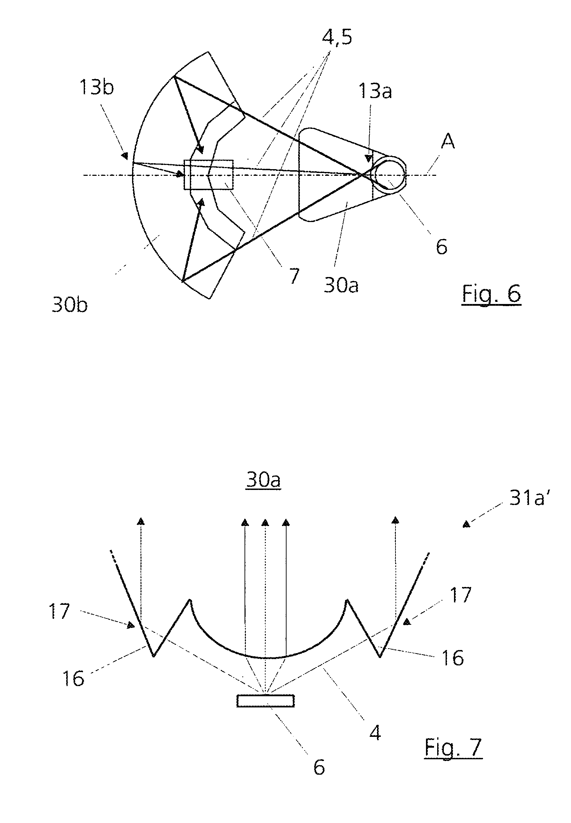

Die optische Regensensorvorrichtung kann bezüglich des Wirkungsgrades noch weiter optimiert werden. Das Strahlbündel 4 in der Senderoptikanordnung 30a kann wie in Figur 6 gezeigt in Teilbündel aufgeteilt werden, welche sich überkreuzen. Dadurch kann eine sehr hohe Homogenität der sensitiven Fläche erreicht werden. Außerdem wird gewährleistet, dass das Strahlbündel 4 nicht zu stark aufgeweitet wird.

Der Bereich 31a der Senderoptikanordnung 30a hat die Aufgabe das Licht, welches von der Strahlungsquelle 6 ausgesendet wird, insbesondere durch Lichtbrechung zu parallelisieren. Dadurch können jedoch Verluste entstehen, da Licht durch Brechung nicht beliebig stark umgelenkt werden kann. In einer vorteilhaften Ausführungsform eines Bereichs 31 a' der Senderoptikanordnung 30a ist es daher denkbar wie in Figur 7 dargestellt, Randbereiche 16 der Senderoptikanordnung 30a, mit Totalreflexionsflächen 17 zu versehen, welche die Strahlen 4 durch eine weitere Totalreflexion nach oben in Richtung Totalreflexionsfläche 13a lenken. Die Strahlung 4 der Strahlungsquelle 6 wird dadurch noch besser eingekoppelt. Stark seitliche Strahlen werden ebenfalls nach oben gelenkt.

Die Richtung, für welche die optische Regensensorvorrichtung hinsichtlich Fremdlicht besonders empfindlich ist, verläuft beispielsweise in Figur 1 von rechts oben nach links unten. Diese Richtung ist durch die Eigenschaften der über dem Empfänger 7 angeordneten Linse bzw. Empfängeroptikanordnung 3b bedingt. Die erfindungsgemäße optische Regensensorvorrichtung kann ein wesentlich besseres Fremdlichtverhalten aufweisen, wenn die Positionen von Strahlungsquelle 6 und Photodiode bzw. Empfänger 7 im Hinblick auf die Fahrbahnposition und Windschutzscheibe 1 vertauscht werden, die Strahlungsquelle 6 also fahrbahnnah angeordnet wird. In diesem Fall ist der Bereich der größten Fremdlichtempfindlichkeit auf die Fahrbahnebene gerichtet. Da beispielsweise das Sonnenlicht nicht von unten nach oben scheinen kann, ist dies wesentlich vorteilhafter.

## Patentansprüche

1. Verschachtelte, wenigstens annähernd auf einer kreisförmigen Grundfläche angeordnete Anordnung von wenigstens zwei als separate optische Kanäle (20,21) gegeneinander gerichteten optischen Regensensorvorrichtungen für ein Kraftfahrzeug mit wenigstens einer elektromagnetischen Strahlungsquelle (6) und wenigstens einer Empfangseinrichtung (7), mittels welcher eine von der wenigstens einen Strahlungsquelle (6) emittierte elektromagnetische Strahlung (4,5) empfangbar ist, wobei die elektromagnetische Strahlung (4,5) von der wenigstens einen Strahlungsquelle (6) mittels wenigstens einer Senderoptikanordnung (3a,30a) an eine Grenzfläche (10) der Windschutzscheibe (1) des Kraftfahrzeugs mit dem Fahrzeugäußeren geleitet, dort reflektiert und mittels wenigstens einer Empfängeroptikanordnung (3b,30b) weiter auf die wenigstens eine Empfangseinrichtung (7) geleitet wird, wobei die wenigstens eine Senderoptikanordnung (30a) und die wenigstens eine Empfängeroptikanordnung (30b) jeweils wenigstens eine gekrümmte Totalreflexionsfläche (13a,13b) für die elektromagnetische Strahlung (4,5) aufweisen, wobei die Krümmungen der jeweiligen Totalreflexionsflächen (13a,13b) der wenigstens einen Senderoptikanordnung (30a) und der wenigstens einen Empfängeroptikanordnung (30b) in der Weise aufeinander abgestimmt sind, dass die elektromagnetische Strahlung (4,5) von der gekrümmten Totalreflexionsfläche (13a) der Senderoptikanordnung (30a) aufgeweitet und von der gekrümmten Totalreflexionsfläche (13b) der Empfängeroptikanordnung (30b) auf die Empfangseinrichtung (7) gebündelt wird.

2. Verschachtelte Anordnung nach Anspruch 1, **dadurch gekennzeichnet, dass** wenigstens eine, insbesondere zackenartige, lichtundurchlässige Fremdlichtbarriere (14a) vorgesehen ist.

3. Verschachtelte Anordnung nach Anspruch 1 oder 2, **dadurch gekennzeichnet, dass** die wenigstens eine Empfangseinrichtung (7) und die wenigstens eine Strahlungsquelle (6) durch wenigstens eine lichtundurchlässige Wand (14b) voneinander getrennt sind.

4. Verschachtelte Anordnung nach Anspruch 1, 2 oder 3, **dadurch gekennzeichnet, dass** zusätzliche Totalreflexionsflächen (17), insbesondere in Randbereichen der wenigstens einen Senderoptikanordnung (30a) und/oder der wenigstens einen Empfängeroptikanordnung (30b), vorgesehen sind.

## Claims

1. Nested arrangement, arranged at least approximately on a circular base surface, of at least two optical rain sensor devices, directed against one another as separate optical channels (20, 21), for a motor vehicle, having at least one electromagnetic radiation source (6) and at least one receiving device (7) by means of which it is possible to receive an electromagnetic radiation (4, 5) emitted by the at least one radiation source (6), in which the electromagnetic radiation (4, 5) from the at least one radiation source (6) is guided by means of at least one transmitter optics arrangement (3a, 30a) to an interface (10) of the windscreen (1) of the motor vehicle with the motor vehicle exterior, reflected there and guided further, by means of at least one receiver optics arrangement (3b, 30b), onto the at least one receiving device (7), in which the at least one transmitter optics arrangement (30a) and the at least one receiver optics arrangement (30b) respectively have at least one curved total reflection surface (13a, 13b) for the electromagnetic radiation (4, 5), and in which the curvatures of the respective total reflection surfaces (13a, 13b) of the at least one transmitter optics arrangement (30a) and of the at least one receiver optics arrangement (30b) are tuned to one another in such a way that the electromagnetic radiation (4, 5) is expanded by the curved total reflection surface (13a) of the transmitter optics arrangement (30a) and is focused onto the receiving device (7) by the curved total reflection surface (13b) of the receiver optics arrangement (30b).

2. Nested arrangement according to Claim 1, **characterized in that** at least one opaque, in particular notched, extraneous light barrier (14a) is provided.

3. Nested arrangement according to Claim 1 or 2, **characterized in that** the at least one receiving device (7) and the at least one radiation source (6) are separated from one another by at least one opaque wall (14b).

4. Nested arrangement according to Claim 1, 2 or 3, **characterized in that** additional total reflection surfaces (17) are provided, particularly in edge regions of the at least one transmitter optics arrangement (30a) and/or of the at least one receiver optics arrangement (30b).

## Revendications

1. Ensemble imbriqué disposé au moins sensiblement sur une surface de base circulaire, constitué d'au moins deux dispositifs optiques de détection de pluie orientés l'un face à l'autre et présentant la forme de canaux optiques (20, 21) séparés, pour un véhicule automobile, l'ensemble présentant au moins une source (6) de rayonnement électromagnétique et au moins un dispositif de réception (7) qui permet de recevoir un rayonnement électromagnétique (4, 5) émis par la ou les sources de rayonnement (6),
le rayonnement électromagnétique (4, 5) émis par la ou les sources de rayonnement (6) étant envoyé à l'aide d'au moins un ensemble (3a, 30a) d'optiques de détection sur une surface (10) du pare-brise (1) du véhicule automobile qui forme la frontière avec l'extérieur du véhicule, y étant réfléchi et étant amené sur le ou les dispositifs de réception (7) au moyen d'au moins un ensemble (3b, 30b) d'optiques de réception,
le ou les ensembles (30a) d'optiques d'émission et le ou les ensembles (30b) d'optiques de réception présentant tous deux au moins une surface courbe (13a, 13b) réfléchissant totalement le rayonnement électromagnétique (4, 5), les courbures de chacune des surfaces de réflexion totale (13a, 13b) du ou des ensembles (30a) d'optiques d'émission et du ou des ensembles (30b) d'optiques de réception étant accordées l'une à l'autre de telle sorte que le rayonnement électromagnétique (4, 5) soit élargi par la surface courbe (13a) de réflexion totale de l'ensemble (30a) d'optiques d'émission et soit concentré sur le dispositif de réception (7) par la surface courbe (13b) de réflexion totale de l'ensemble (30b) d'optiques de réception.

2. Ensemble imbriqué selon la revendication 1, **caractérisé en ce qu'**il présente au moins une barrière (14a) à la lumière étrangère, non transparente et en particulier en forme de poche.

3. Ensemble imbriqué selon la revendication 1 ou 2, **caractérisé en ce que** le ou les dispositifs de réception (7) et le ou les sources de rayonnement (6) sont séparés les uns des autres par au moins une paroi (14b) non transparente.

4. Ensemble imbriqué selon la revendication 1, 2 ou 3, **caractérisé en ce que** des surfaces supplémentaires (17) de réflexion totale sont prévues en particulier dans les bordures du ou des ensembles (30a) d'optiques d'émission et/ou du ou des ensembles (30b) d'optiques de réception.
